# FASCICULE DE BREVET EUROPEEN

(11) **EP 0 646 525 B1**
(45) Date de publication et mention de la délivrance du brevet: **05.11.1997**
(21) Numéro de dépôt: 94402159.1
(22) Date de dépôt: 28.09.1994
(51) Int. Cl.: B64D 33/02, F02C 7/042

(54) **Entrée d'air supersonique et hypersonique bidimensionnelle, à trois rampes mobiles, pour l'air de combustion d'un moteur d'aéronef**
Zweidimensionaler Über- und Hyperschall-Lufteinlauf mit drei bewegbaren Rampen für die Verbrennungsluft eines Flugzeugmotors
Bidimensional supersonic and hypersonic air intake with three mobile ramps for the combustion air of an aircraft engine

(30) Priorité: 01.10.1993 FR 9311726
(43) Date de publication de la demande: 05.04.1995
(73) Titulaire: Office National d'Etudes et de Recherches Aérospatiales (O.N.E.R.A.), 92320 Châtillon-sous-Bagneux (FR)
(72) Inventeur: Falempin, François, F-78730 Saint Arnoult en Yvelines (FR); Fourt, Olivier, F-78350 Jouy en Josas (FR); Pastre, Jean-Louis, F-91700 Sainte Genevieve Des Bois (FR)
(74) Mandataire: Bérogin, Francis

(56) Documents cités:
- GB-A- 899 625
- US-A- 3 941 336
- US-A- 4 372 505
- US-A- 4 991 795

## Description

L'invention est relative à une entrée d'air supersonique et hypersonique pour l'air de combustion d'un moteur d'aéronef, cette entrée d'air étant du type bidimensionnel à géométrie variable, et destinée à être implantée sous la voilure ou le fuselage de l'aéronef.

L'entrée d'air selon l'invention est destinée à l'équipement d'avions supersoniques et hypersoniques de transports intercontinentaux, ainsi que de lanceurs spatiaux mono ou multiétage à propulsion aérobie.

Pour équiper de tels aéronefs, on sait que l'entrée d'air ne doit pas présenter de traînée, de masse ni d'encombrement qui soient prohibitifs. L'entrée d'air doit enfin être capable d'assurer une bonne alimentation en air du ou des moteurs, dans tout le domaine de vol s'étendant jusqu'à un nombre de Mach élevé (Mach 10 à 12 environ).

L'entrée d'air doit donc pouvoir présenter de bonnes performances, en termes d'efficacité et de débit, dans un grand domaine de vol, pour pouvoir être appliquée aux types précités d'aéronefs : c'est ainsi que l'entrée d'air doit être adaptée au nombre de Mach et à l'altitude de vol, deux paramètres qui sont directement liés.

En effet, les vols à basse altitude ne peuvent être envisagés qu'à des nombres de Mach modérés (jusqu'à 3), pour des raisons de tenue des matériaux en température, alors qu'à haute altitude (20 000 à 30 000 mètres), le nombre de Mach doit être nettement supérieur pour permettre, compte tenu de la raréfaction de l'air, le maintien d'une pression dynamique suffisante pour assurer la sustentation et/ou l'accélération de l'aéronef.

De ce fait, pour obtenir une forte poussée sur toute la trajectoire de l'aéronef, tant à basse qu'à haute altitude, il est nécessaire de fournir au moteur un débit très variable d'air de combustion avec un taux de récupération de pression génératrice suffisant à tous les nombres de Mach.

L'entrée d'air doit donc présenter une section d'entrée qui peut augmenter dans des proportions importantes avec l'augmentation du nombre de Mach : cette augmentation de la section d'entrée doit pouvoir se poursuivre jusqu'à Mach 6 ou 7 environ.

On a donc proposé des entrées d'air à géométrie variable.

Par le brevet français n° 2 635 075 au nom du présent demandeur, on connaît une entrée d'air supersonique bidimensionnelle à géométrie variable comportant, d'un côté, une carène, et de l'autre côté, un volet avant formant visière et articulé autour d'un axe de pivotement situé à l'opposé de la carène, ainsi qu'un bec de carène mobile, situé en avant de la carène et solidaire du volet avant, ce bec de carène mobile étant agencé pour se déplacer en avant de la carène quand le volet avant se déplace dans le sens qui agrandit la section de l'entrée d'air.

Cette réalisation, satisfaisante jusqu'à un nombre de Mach de l'ordre de 4, présente cependant l'inconvénient que la plage de Mach est limitée par l'importante traînée de carène qu'elle implique à très haut Mach, supérieur à 4 ou 5.

Pour éviter l'inconvénient de la traînée de carène, et pour accroître encore la plage de variation de la section de captation de l'air de combustion et du taux de compression, il a été proposé par le présent demandeur dans le brevet français n° 2 635 076 une entrée d'air bidimensionnelle supersonique et hypersonique, comportant deux volets avant formant visière, disposés symétriquement de part et d'autre d'un plan longitudinal de l'entrée d'air, chaque volet avant étant mobile autour d'un axe de pivotement situé simultanément au voisinage de la paroi de l'entrée d'air qui prolonge le volet avant considéré, et au voisinage d'un premier piège à couche limite disposé dans ladite paroi de l'entrée d'air qui prolonge vers l'arrière ledit volet avant.

Les parois internes des volets, c'est-à-dire les parois dont chacune est tournée vers l'autre volet, sont ainsi aménagées en rampes de compression face à face et verticales sous le fuselage et/ou la voilure de l'aéronef.

Mais si le Mach d'adaptation est élevé, la déviation totale, répartie à parts égales entre les deux rampes de compression et le plan de symétrie de l'entrée d'air, conduit à un choc très intense sur ce dernier, qui limite l'efficacité de l'entrée d'air à grand Mach.

Pour améliorer cette efficacité à grand Mach, en répartissant mieux la compression sur le plan de symétrie, le brevet français n° 2 635 076 propose des réalisations d'autant plus sophistiquées que la plage de Mach à couvrir est importante, par l'adjonction, à chaque volet avant, d'un volet arrière mobile relié au volet avant et en aval du premier piège à couche limite, l'extrémité arrière de ce volet arrière mobile coopérant avec l'extrémité avant d'un élément de paroi interne mobile pour définir un second piège à couche limite, ou en aménageant la partie arrière de la paroi interne de chaque volet avant, de sorte qu'elle soit formée de deux éléments de paroi articulés, le premier sur le volet avant considéré et le second sur le premier élément de paroi, l'extrémité arrière du second élément de paroi coopérant avec l'extrémité avant d'un élément de paroi interne mobile pour définir le premier piège à couche limite, dont la position dans le canal de l'entrée d'air peut varier en fonction du nombre de Mach.

Mais ces réalisations à efficacité améliorée sont d'une grande complexité mécanique et d'une masse accrue.

Il se pose de plus des problèmes d'interactions importantes chocs-couches limites, au niveau des flancs de l'entrée d'air, ainsi que des problèmes d'intégration de plusieurs entrées d'air de ce type sous le fuselage d'un lanceur spatial aérobie, par exemple, notamment pour assurer le fonctionnement convenable de l'ensemble du système propulsif en régime transsonique (blocage éventuel de l'écoulement entre les fuseaux moteurs).

Le but de l'invention est de remédier aux inconvénients des réalisations décrites dans le document FR 2 635 076, en adaptant plus particulièrement l'entrée d'air à un moteur du type statoréacteur mixte, à combustion subsonique puis pouvant fonctionner en superstatoréacteur, c'est-à-dire en statoréacteur pour lequel la combustion dans le foyer se déroule dans un écoulement en régime supersonique, nécessaire notamment à un lanceur spatial aérobie, de sorte que l'entrée d'air puisse notamment :
- présenter une excellente compatibilité avec le fonctionnement du moteur en superstatoréacteur,
- être adaptée au vol à haut Mach,
- présenter un grand rapport largeur sur hauteur,
- présenter des moyens moteurs, actionnant les éléments mobiles de l'entrée d'air, qui soient limités en nombre, en dimension et en masse, en supprimant les porte-à-faux qui créent des efforts importants sur les articulations.

A cet effet, l'invention propose une entrée d'air supersonique et hypersonique, bidimensionnelle à géométrie variable, pour l'air de combustion d'un moteur d'aéronef, placée sous la voilure ou le fuselage de l'aéronef, et comprenant deux volets principaux disposés en vis-à-vis, dont les parois internes, en regard l'une de l'autre, sont aménagées en rampes de compression face à face, et chacun mobile autour d'un axe de pivotement situé au voisinage d'une paroi de l'entrée d'air qui prolonge vers l'arrière le volet principal considéré, paroi dans laquelle est disposé un premier piège à couche limite, les axes de pivotement des deux volets principaux étant sensiblement parallèles au plan de la voilure ou du fuselage de sorte que les susdits volets principaux se déplacent perpendiculairement à ce plan, et qui se caractérise en ce qu'une rampe, mobile autour d'un axe de pivotement sensiblement parallèle aux axes de pivotement des volets principaux et situé à proximité de son bord d'attaque, est disposée en amont du volet principal le plus proche de la voilure ou du fuselage, cette rampe amont étant adjacente en son bord d'attaque à la voilure ou au fuselage et délimitant avec ledit volet principal un autre piège à couche limite, de section variable.

Une telle entrée d'air a pour avantage que la rampe amont orientable dévie l'écoulement d'air vers le plan médian de l'entrée d'air et permet de ménager et de maintenir, jusqu'à la phase de fonctionnement en superstatoréacteur, un piège à couche limite de section variable de dimension satisfaisante. A faible nombre de Mach, la section frontale de l'entrée d'air est minimale, et la rampe amont est orientée de manière à ménager ce piège à couche limite de section variable. Lorsque le nombre de Mach augmente, les deux volets principaux sont ouverts progressivement, et la rampe amont est rabattue vers la voilure ou le fuselage pour conserver le même piège à couche limite de section variable. Enfin, en mode de fonctionnement en superstatoréacteur, les volets principaux sont pivotés de manière à délimiter une ouverture maximale avec la coopération de la rampe amont qui se prolonge par le volet lui faisant suite, le piège à couche limite de section variable étant fermé. L'adjonction de la rampe amont orientable, au volet principal supérieur, puisque l'entrée d'air est sous la voilure ou le fuselage, permet de limiter l'augmentation de traînée résultant, dans les réalisations de l'état de la technique, de l'utilisation de grands volets avant ou principaux à articulation arrière.

Avantageusement, le piège à couche limite de section variable peut être de section nulle, de sorte que, pour les phases d'accélération initiale et de rentrée, lorsque le statoréacteur mixte de l'aéronef est associé à un moteur fusée, ou pour la phase de rentrée lorsque le statoréacteur mixte est à éjecteurs, le piège à couche limite de section variable est également fermé en configuration de fermeture de l'entrée d'air, dans laquelle les deux volets principaux sont pivotés l'un contre l'autre.

Avantageusement, à cet effet les bords d'attaque des deux volets principaux peuvent sensiblement entrer en contact, de manière à fermer l'entrée d'air.

D'une manière générale, le piège à couche limite de section variable présente une section de passage réglable, qui est commandée par des moyens moteurs de la rampe amont et des volets principaux.

Avantageusement, ces moyens moteurs d'actionnement de la rampe amont et des volets principaux sont des actionneurs linéaires implantés dans au moins un carénage latéral de l'entrée d'air, au droit respectivement de la susdite rampe amont et des susdits volets principaux, au moins un actionneur linéaire agissant sur l'un au moins des volets principaux au niveau de l'un au moins des flancs latéraux solidaires de ce volet.

Avantageusement de plus, les parois de l'entrée d'air qui prolongent les volets principaux vers l'arrière comportent des rampes de compression fixes, en vis-à-vis, associées à un diffuseur fixe.

Dans ce cas, il est en outre avantageux que la paroi de l'entrée d'air qui prolonge le volet principal ne faisant pas suite à la rampe, et/ou la paroi de l'entrée d'air qui prolonge le volet principal faisant suite à la rampe, présente aussi au moins un autre piège à couche limite, dont l'obturation est commandée par des moyens moteurs en particulier pour la phase superstatoréacteur.

L'invention consiste, mises à part les diverses dispositions dont il vient d'être question, en certaines autres dispositions qui s'utilisent de préférence en même temps, et dont il sera plus explicitement question ci-après.

L'invention pourra, de toute façon, être bien comprise à l'aide du complément de description qui suit, ainsi que de dessins ci-annexés, lesquels, compléments et dessins, sont relatifs à un mode de réalisation préféré de l'invention et ne comportent, bien entendu, aucun caractère limitatif.

La figure 1 de ces dessins est un schéma de face d'un aéronef équipé de deux entrées d'air conformes à l'invention et disposées principalement sous sa voilure, et partiellement sous son fuselage.

Les figures 2 et 3 montrent, en coupe axiale schématique, et dans deux positions différentes, une entrée d'air établie conformément à un mode de réalisation préféré de l'invention, avec un piège à couche limite ouvert entre la rampe amont et le volet supérieur.

Les figures 4 et 5 montrent, de manière analogue aux figures 2 et 3, et dans deux positions différentes, l'entrée d'air dont le piège à couche limite entre la rampe amont et le volet supérieur est fermé.

Les figures 6 et 7 montrent, schématiquement en élévation latérale et avec arrachements, l'implantation des moyens moteurs dans les positions respectivement des figures 4 et 5.

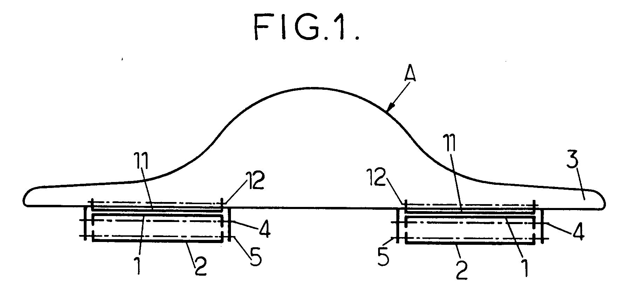

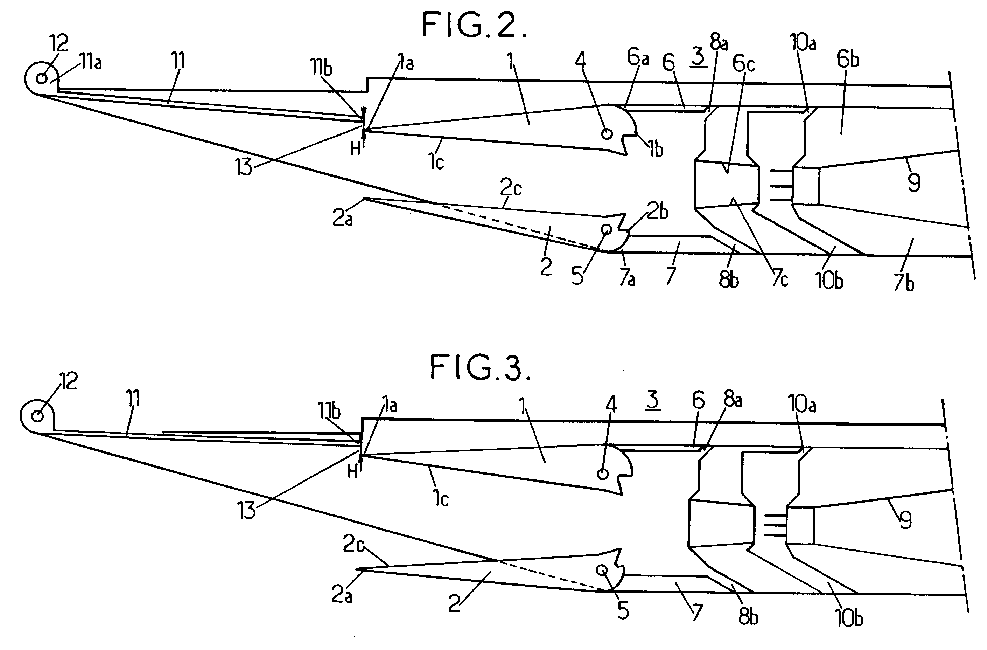

Sur la figure 1, l'aéronef est désigné, d'une façon générale, par la référence A. Si l'on se réfère également aux figures 2 à 5, chaque prise d'air comporte deux volets principaux mobiles 1 et 2, disposés en vis-à-vis, et présentant chacun un bord d'attaque respectivement 1a et 2a, et un bord de fuite respectivement 1b et 2b, les deux bords d'attaque 1a et 2a et les bords de fuite 1b et 2b étant sensiblement parallèles.

Chacun des volets 1 et 2 est progressivement effilé sensiblement de la zone voisine de son bord de fuite 1b ou 2b jusqu'à son bord d'attaque 1a ou 2a, et sa paroi interne respectivement 1c ou 2c, tournée vers celle de l'autre volet, est aménagée en rampe de compression sensiblement plane et mobile.

Le volet 1, adjacent à la voilure 3, ou volet supérieur (puisque la prise d'air est implantée sous la voilure 3), est articulé autour d'un axe de pivotement 4 situé au voisinage de son bord de fuite 1b, et parallèle à ce dernier ainsi sensiblement qu'au plan de la voilure 3, en étant sensiblement perpendiculaire au plan médian longitudinal de symétrie de l'aéronef A.

Le volet 2, le plus écarté de la voilure 3 ou volet inférieur, est articulé autour d'un axe de pivotement 5 situé au voisinage de son bord de fuite 2b, et également parallèle à ce bord de fuite 2b ainsi sensiblement qu'au plan de la voilure 3, en étant également sensiblement perpendiculaire au plan médian longitudinal de symétrie de l'aéronef A.

Ainsi, les deux volets principaux 1 et 2 se déplacement perpendiculairement au plan de la voilure 3.

L'axe 4 du volet supérieur 1 est solidaire en 6a d'une paroi supérieure fixe 6 de l'entrée d'air, qui prolonge vers l'arrière le volet supérieur 1, et qui présente, en saillie vers le plan médian de l'entrée d'air, une rampe de compression aval supérieure et fixe 6c qui forme avec la paroi lc un premier piège à couche limite interne dont le débit est réglé par le conduit sonique 8a.

De même, l'axe 5 du volet inférieur 2 est solidaire en 7a d'une paroi inférieure fixe 7, qui prolonge vers l'arrière le volet inférieur 2, et qui présente une rampe de compression aval inférieure et fixe 7c, en saillie vers le plan médian de l'entrée d'air et en vis-à-vis de la rampe supérieure fixe 6c avec laquelle elle forme un convergent fixe, et qui forme avec la paroi 2c un deuxième piège à couche limite interne dont le débit est réglé par le conduit sonique 8b.

Les parties arrières 6b et 7b des parois respectivement supérieure 6 et inférieure 7 fixes sont associées à un diffuseur fixe, désigné dans son ensemble en 9. La paroi supérieure fixe 6 présente, entre sa partie portant la rampe de compression supérieure fixe 6c et sa partie arrière 6b, un troisième piège à couche limite interne contrôlé par le conduit sonique 10a, tandis que la paroi inférieure fixe 7 présente, entre sa partie portant la rampe de compression inférieure fixe 7c et sa partie arrière 7b, un quatrième piège à couche limite interne contrôlé par le conduit sonique 10b.

De manière connue, l'obturation de l'un et/ou de l'autre des conduits des pièges à couche limite 8a, 8b et 10a, 10b peut être commandée par des moyens moteurs (actionneurs) de faible encombrement, dont l'implantation ne pose pas de problème délicat.

L'entrée d'air comprend également une rampe amont mobile 11, disposée en avant du volet supérieur 1, et articulée autour d'un axe de pivotement 12, qui est sensiblement parallèle aux axes de pivotement 4 et 5 des volets principaux 1 et 2, et qui est situé à proximité de son bord d'attaque 11a, et sensiblement parallèle à ce dernier, lui-même sensiblement parallèle aux bords d'attaque 1a et 2a.

Dans cet exemple, la zone de la rampe 11 qui entoure son axe 12 est logée à l'intérieur de la voilure 3.

Le bord de fuite 11b de la rampe orientable 11 est situé juste à l'avant du bord d'attaque 1a du volet supérieur 1, de façon à délimiter avec ce bord d'attaque 1a, un piège à couche limite externe 13, dont la section de passage variable est réglée par la position relative du bord de fuite 11b et du bord d'attaque 1a, et ainsi commandée par les moyens moteurs ou actionneurs qui commandent les pivotements du volet supérieur 1 et de la rampe amont 11.

La rampe amont 11, adjacente à la voilure 3 par son bord d'attaque 11a, et le volet supérieur 1 qui lui fait suite définissent ainsi une paroi mobile supérieure de l'entrée d'air, avec un piège à couche limite 13 à section de passage réglable, tandis que le volet inférieur 2 définit une paroi inférieure mobile de l'entrée d'air.

Cette dernière a toutes ses rampes de compression mobiles 1c, 2c et 11 comme fixes 6c et 7c en amont de son col, lequel est fixe et formé entre ses rampes de compression fixes 6c et 7c et le diffuseur 9.

L'entrée d'air, dont la structure vient d'être décrite, fonctionne de la manière suivante.

A faible nombre de Mach, en vol subsonique, transsonique et supersonique jusqu'à Mach 2, la configuration donnée à l'entrée d'air par les moyens moteurs actionnant les volets 1 et 2 et la rampe 11 orientables est celle représentée sur la figure 2 : chacune des trois rampes 11, 1c et 2c est inclinée sensiblement d'un même angle (en valeur absolue de l'ordre de 4 degrés) sur le plan médian, les rampes 1c et 2c étant sensiblement parallèles l'une à l'autre, l'inclinaison de la rampe lc correspondant à celle de la rampe amont 11, qui est écartée de la voilure 3 et dont le bord de fuite 11b est écarté du bord d'attaque 1a du volet supérieur 1 d'une distance verticale H suffisante pour avoir le piège à couche limite 13 externe souhaité.

A partir de cette configuration, pour laquelle la section frontale de l'entrée d'air est minimale, lorsque le nombre de Mach varie entre 2 et 5, les moyens moteurs écartent progressivement les volets 1 et 2 l'un de l'autre et rabattent progressivement la rampe amont 11 vers la voilure 3, et ces moyens moteurs actionnent la rampe amont 11 et le volet supérieur 1 de façon à commander leur pivotement synchronisé pour que le piège à couche limite 13 conserve une section de passage constante (écartement H conservé entre le bord de fuite 11b de la rampe 11 et le bord d'attaque la du volet 1).

La configuration représentée sur la figure 3 est celle obtenue pour Mach 3,5. La rampe amont 11 est inclinée sur le plan médian d'un angle de l'ordre de 1,5 degré, les rampes 1c et 2c étant respectivement inclinées sur le plan médian d'un angle de l'ordre de 7 degrés et de 4 degrés et formant un convergent, chacune des deux rampes 1c et 2c étant inclinée vers ce plan médian, de l'amont vers l'aval.

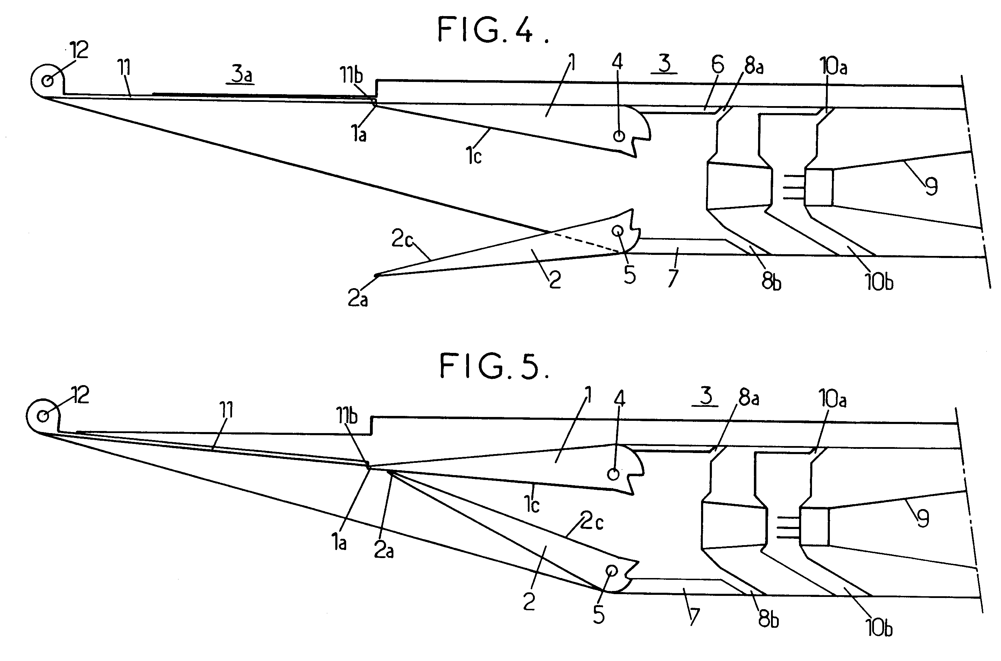

Au-delà de Mach 5, lorsque le moteur (non représenté) alimenté par l'entrée d'air, et qui est un statoréacteur mixte, fonctionne en mode superstatoréacteur, la configuration donnée à l'entrée d'air par les moyens moteurs est celle de la figure 4 : la rampe amont 11 orientable est plaquée contre la voilure 3 ou, plus précisément, contre une partie 3a de celle-ci qui constitue une rampe supérieure fixe de l'entrée d'air, limitée, au regard du bord de fuite 11b de la rampe orientable 11, par un ressaut vers la voilure 3. L'écartement des volets 1 et 2 est maximal, de sorte que l'ouverture de l'entrée d'air est maximale, les rampes en regard 1c et 2c étant inclinées sur le plan médian d'un angle respectivement de l'ordre de 10 degrés et 14 degrés. Une autre différence essentielle par rapport aux configurations des figures 2 et 3 est que les moyens moteurs actionnant la rampe amont 11 et le volet supérieur 1 commandent la fermeture du piège à couche limite 13, le bord de fuite 11b de la rampe 11 étant directement appliqué contre le bord d'attaque 1a du volet supérieur 1.

De plus, lorsque le moteur est un statoréacteur mixte à éjecteurs, ou un statoréacteur mixte associé à un moteur-fusée pur, l'entrée d'air peut prendre respectivement aux phases d'accélération initiale et de rentrée, une configuration fermée, représentée sur la figure 5. La mobilité des volets 1 et 2 et les moyens moteurs qui les actionnent permettent le pivotement des deux volets 1 et 2 l'un vers l'autre, jusqu'à ce que le bord d'attaque 2a du volet inférieur 2 soit appliqué contre la rampe 1c du volet supérieur 1 à proximité de son bord d'attaque 1a, et, simultanément, la rampe amont 11 est écartée de la voilure et pivotée par ses moyens moteurs jusqu'à application de son bord de fuite 11b contre le bord d'attaque la du volet supérieur 1 pour maintenir fermé le piège à couche limite 13.

Ainsi, la rampe amont orientable 11 dévie l'écoulement vers le plan médian de l'entrée d'air, et permet, dans un premier temps, l'adaptation de la direction de l'écoulement par rapport à l'orientation du plan médian des rampes 1c et 2c en vis-à-vis, et, en association avec la rampe inférieure 2c, le réglage de la section de captation aux possibilités de captation de débit de la section minimale, délimitée à l'extrémité aval des rampes de compression arrière fixes 6c et 7c et à géométrie fixe, de l'entrée d'air, en particulier en transsonique, régime pour lequel la prise d'air fonctionne alors pratiquement comme une entrée d'air bidimensionnelle, qui aurait une section de captation réglable.

La rampe amont orientable 11 permet aussi de ménager et de maintenir un piège 13 à couche limite externe de dimensions satisfaisantes pendant toutes les phases de fonctionnement qui précèdent le fonctionnement en régime de superstatoréacteur, sauf lorsque le statoréacteur mixte est associé à un moteur-fusée pur et que l'entrée d'air et ce piège à couche limite sont fermés en phase d'accélération initiale, la rampe amont orientable 11 permettant l'annulation (ou fermeture) de ce piège à couche limite 13 dès le Mach de transition vers cette phase de fonctionnement en superstatoréacteur, c'est-à-dire vers Mach 5.

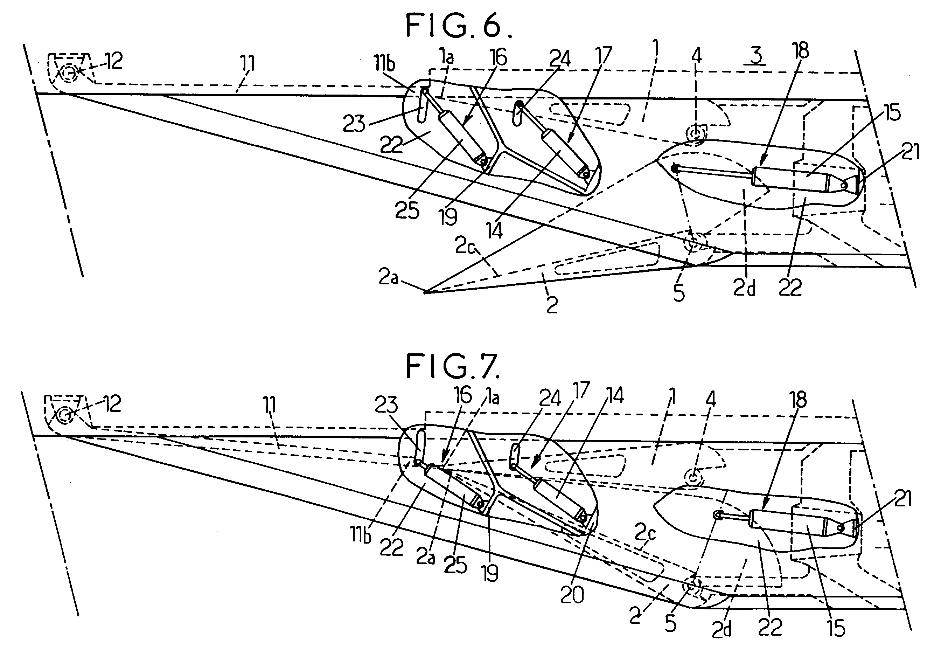

Sans prendre en compte les moyens moteurs commandant la fermeture des conduits soniques de contrôle des pièges à couche limite internes 8a, 8b et 10a, 10b en phase de superstatoréacteur, car leur réalisation et leur implantation sont classiques et ne posent pas de problème particulier, les moyens moteurs principaux sont limités à trois actionneurs linéaires 25, 14 et 15, tels que des vérins hydrauliques, manoeuvrant respectivement la rampe amont supérieure 11, le volet supérieur 1 et le volet inférieur 2, comme représenté schématiquement sur les figures 6 et 7. Ces figures correspondent respectivement aux configurations des figures 4 et 5 (phase superstatoréacteur et entrée d'air fermée) et représentent donc les trois organes actionnés dans leurs deux positions extrêmes, à l'ouverture (figure 6) et à la fermeture (figure 7) de l'entrée d'air. Les vérins 25, 14 et 15 sont implantés d'une manière très simplifiée chacun dans l'un respectivement de trois carénages latéraux, partiellement et schématiquement représentés en 16, 17 et 18, mis en place chacun au droit de l'organe manoeuvré par le vérin qu'il loge, et délimités partiellement par des nervures d'appui 19, 20 et 21 sur la face externe d'un flanc latéral 22 de l'entrée d'air. Chacun des vérins 25, 14 et 15 est articulé par l'extrémité fermée de son cylindre sur un point fixe de la nervure d'appui 19, 20 ou 21 correspondante, tandis que l'extrémité de la tige qui est externe au cylindre des vérins 25 et 14 est articulée sur un point fixe latéral respectivement du bord de fuite 11b de la rampe amont 11 et du volet supérieur 1 à proximité de son bord d'attaque. Les débattements de ces points fixes d'articulation sur la rampe 11 et le volet supérieur 1 sont limités pour chacun par une lumière 23 ou 24 ménagée dans le flanc 22 et chacune cintrée en forme d'arc de cercle centré respectivement sur l'axe 12 et l'axe 4 de pivotement de la rampe 11 et du volet 1. Par contre, l'extrémité de la tige du vérin 15 s'articule en un point fixe sur un flanc latéral 2d du volet inférieur 2, au niveau d'un secteur circulaire présenté par ce flanc 2d à proximité de l'axe 5.

Cette réalisation, qui limite le nombre et les dimensions des actionneurs, limite également fortement les efforts sur les axes d'articulations, et donc sur la structure, du fait de la suppression de tout porte-à-faux important, qui aurait pour conséquence d'introduire une trop grande souplesse, néfaste à la stabilité dynamique des volets 1 et 2 et de la rampe 11.

L'entrée d'air selon l'invention, qui assure la compression de l'air par une paire de rampes mobiles 1c, 2c en vis-à-vis et à ouverture verticale, suivie d'une paire de rampes fixes 6c, 7c en vis-à-vis, et équipée d'une rampe amont orientable 11 permettant d'adapter la géométrie quelle que soit l'ouverture des rampes mobiles en vis-à-vis, 1c et 2c, présente de nombreux avantages : l'ensemble constitué par les deux rampes arrière fixes 6c et 7c et le diffuseur 9 est globalement fixe, ce qui permet une alimentation aisée de la section minimale ou col fixe de l'entrée d'air en combustible et facilite grandement la conception de la chambre du superstatoréacteur, de sorte que cette entrée d'air est d'une bonne compatibilité avec un statoréacteur mixte, pour assurer son fonctionnement en superstatoréacteur.

Il est à noter que la fixité de l'ensemble des rampes 6c et 7c et du diffuseur 9 a également pour conséquence de limiter le nombre des moyens moteurs.

La conception de l'entrée d'air permet de limiter l'effet des interactions choc-couche limite sur les parois latérales de l'entrée d'air, qui peuvent être très espacées (par exemple avoir une largeur de 4 m pour une hauteur de captation de 72 cm à Mach 2). La longueur de la zone de compression est réduite, et l'entrée d'air est adaptée à présenter un très grand rapport largeur sur hauteur de sa section de captation, ce qui rend inutile, ou du moins d'un faible intérêt, de prévoir des flancs latéraux solidaires de la rampe amont 11 et du volet supérieur 1, et a pour conséquence de réduire encore les effets d'interaction choc-couche limite sur les flancs.

L'entrée d'air est adaptée au vol à haut Mach à pression dynamique élevée (80 kPa) associé à un fort gradient de portance (nécessaire pour le décollage horizontal) qui induit une incidence de vol très limitée (de l'ordre de 2 degrés), s'accommodant peu d'une modification sensible de l'orientation du plan médian de l'entrée d'air, comme cela est le cas dans les réalisations de l'état de la technique.

L'entrée d'air bidimensionnelle à section de captation variable décrite ci-dessus, et dont l'orientation de l'ouverture permet de réduire l'effet des interactions choc-couche limite sur les flancs, et de limiter les dimensions, les efforts de motorisation et ainsi la masse générale, est donc particulièrement bien adaptée aux besoins d'un statoréacteur mixte, éventuellement du type à éjecteurs.

Cette entrée d'air est donc d'une mise en oeuvre avantageuse sur des avions orbitaux de grande taille (pouvant atteindre 70 m de long), dont les entrées d'air à géométrie variable nécessairement de très grande section doivent avoir une hauteur aussi faible que possible pour, d'une part, que l'entrée d'air soit située en dehors de la zone de l'onde de choc développée par l'avant de l'aéronef aux nombres de Mach élevés, et, d'autre part, réduire l'influence sur les performances des phénomènes nuisibles d'interactions onde de choc-couche limite sur les parois latérales. A cet effet, l'ouverture verticale des volets mobiles et de la rampe orientable de l'entrée d'air entraîne des interactions onde de choc-couche limite qui se font sur des couches limites peu développées, et en l'absence d'interaction avec la couche limite du fuselage et/ou de la voilure. Leur effet néfaste se fait sentir sur une fraction plus faible du débit capté, car le rapport largeur sur hauteur de l'entrée d'air est plus grand que dans les réalisations antérieures. Cette inversion du rapport largeur sur hauteur conduit à une diminution sensible de la longueur de l'entrée d'air, d'où une réduction de masse de la structure générale, et une réduction des efforts appliqués aux articulations et aux moyens moteurs, conduisant à nouveau à une réduction de masse.

## Revendications

1. Entrée d'air supersonique et hypersonique, bidiménsionnelle à géométrie variable, pour l'air de combustion d'un moteur d'aéronef (A), placée sous la voilure (3) ou le fuselage de l'aéronef et comprenant deux volets principaux (1, 2) disposés en vis-à-vis et chacun mobile autour d'un axe de pivotement (4, 5) situé au voisinage d'une paroi (6, 7) de l'entrée d'air qui prolonge vers l'arrière le volet principal (1, 2) considéré, paroi (6, 7) dans laquelle est disposé un premier piège à couche limite (8a, 8b), les axes de pivotement (4, 5) des deux volets principaux (1, 2) étant sensiblement parallèles au plan de la voilure (3) ou du fuselage de sorte que les susdits volets principaux (1, 2) se déplacent perpendiculairement à ce plan, caractérisée en ce qu'une rampe (11), mobile autour d'un axe de pivotement (12) sensiblement parallèle aux axes de pivotement (4, 5) des volets principaux (1, 2), et situé à proximité de son bord d'attaque (11a), est disposée en amont du volet principal (1) le plus proche de la voilure ou du fuselage, cette rampe amont (11) étant adjacente en son bord d'attaque à la voilure (3) ou au fuselage et délimitant avec ledit volet principal (1) un piège à couche limite (13), de section variable.

2. Entrée d'air selon la revendication 1, caractérisée en ce que le piège à couche limite (13) de section variable peut être de section nulle.

3. Entrée d'air selon la revendication 2, caractérisée en ce que les bords d'attaque (1a, 2a) des deux volets principaux (1, 2) peuvent sensiblement entrer en contact.

4. Entrée d'air selon l'une quelconque des revendications précédentes, caractérisée en ce que le piège à couche limite (13) de section variable présente une section de passage réglable qui est commandée par des moyens moteurs (25, 14) de la rampe amont (11) et des volets principaux (1, 2).

5. Entrée d'air selon l'une quelconque des revendications précédentes, caractérisée en ce que les moyens moteurs (25, 14, 15) d'actionnement de la rampe amont (11) et des volets principaux (1, 2) sont des actionneurs linéaires implantés dans au moins un carénage latéral (16, 17, 18) de l'entrée d'air au droit respectivement de la susdite rampe amont (11) et des susdits volets principaux (1, 2), au moins un actionneur linéaire (15) agissant sur l'un (2) au moins des volets principaux au niveau de l'un au moins de flancs latéraux (2d) solidaires de ce volet (2).

6. Entrée d'air selon l'une quelconque des revendications précédentes, caractérisée en ce que les parois (6, 7) de l'entrée d'air qui prolongent les volets principaux (1, 2) comportent des rampes de compression fixes (6c, 7c), en vis-à-vis, associées à un diffuseur fixe (9).

7. Entrée d'air selon la revendication 6, caractérisée en ce que la paroi (7) de l'entrée d'air qui prolonge le volet principal (2) ne faisant pas suite à la rampe (11) présente au moins un autre piège à couche limite (10b) dont l'obturation est commandée par des moyens moteurs.

8. Entrée d'air selon l'une des revendications 6 et 7, caractérisée en ce que la paroi (6) de l'entrée d'air qui prolonge le volet principal (1) faisant suite à la rampe (11) présente au moins un autre piège à couche limite (10a) dont l'obturation est commandée par des moyens moteurs.

## Claims

1. A two-dimensional variable-geometry supersonic and hypersonic air intake, for the combustion air of an aircraft engine, placed under the wings (3) or the fuselage of the aircraft (A) and comprising two main flaps (1, 2) arranged face to face and each movable about a pivot pin (4, 5) situated in the vicinity of one wall (6, 7) of the air intake which extends the main flap (1, 2) in question rearwards, in which wall (6, 7) is arranged a first boundary layer bleed (8a, 8b), the pivot pins (4, 5) of the two main flaps (1, 2) being substantially parallel to the plane of the wings (3) or of the fuselage, so that the abovementioned main flaps (1, 2) move perpendicularly to this plane, characterized in that a ramp (11), which is movable about a pivot pin (12) substantially parallel to the pivot pins (4, 5) of the main flaps (1, 2), and situated in proximity to its leading edge (11a), is arranged upstream of the main flap (1) closest to the wings or to the fuselage, this upstream ramp (11) being adjacent, at its leading edge, to the wings (3) or to the fuselage and delimiting, with said main flap (1), a boundary layer bleed (13) of variable cross section.

2. The air intake as claimed in claim 1, characterized in that the boundary layer bleed (13) of variable cross section may be of zero cross section.

3. The air intake as claimed in claim 2, characterized in that the leading edges (1a, 2a) of the two main flaps (1, 2) may come substantially into contact.

4. The air intake as claimed in any one of the preceding claims, characterized in that the boundary layer bleed (13) of variable cross section exhibits an adjustable passage cross section which is controlled by motor means (25, 14) of the upstream ramp (11) and of the main flaps (1, 2).

5. The air intake as claimed in any one of the preceding claims, characterized in that the actuating motor means (25, 14, 15) of the upstream ramp (11) and of the main flaps (1, 2) are linear actuators installed in at least one lateral fairing (16, 17, 18) of the air intake in line respectively with the abovementioned upstream ramp (11) and with the abovementioned main flaps (1, 2), at least one linear actuator (15) acting on at least one (2) of the main flaps in the region of at least one of lateral flanks (2d) integral with this flap (2).

6. The air intake as claimed in any one of the preceding claims, characterized in that the walls (6, 7) of the air intake which extend the main flaps (1, 2) include fixed compression ramps (6c, 7c), facing each other, associated with a fixed diffuser (9).

7. The air intake as claimed in claim 6, characterized in that the wall (7) of the air intake which extends the main flap (2) not following on from the ramp (11) exhibits at least one other boundary layer bleed (10b), blocking of which is controlled by motor means.

8. The air intake as claimed in either claim 6 or claim 7, characterized in that the wall (6) of the air intake which extends the main flap (1) following on from the ramp (11) exhibits at least one other boundary layer bleed (10a), blocking of which is controlled by motor means.

## Patentansprüche

1. Verstellbarer, zweidimensionaler Über- und Hyperschall-Lufteinlaß für die Verbrennungsluft eines Motors eines Flugzeugs (A), wobei der Lufteinlaß unter dem Tragwerk (3) oder dem Rumpf des Flugzeugs angeordnet ist, enthaltend zwei einander gegenüberliegende, um eine jeweilige Schwenkachse (4, 5) bewegliche Hauptklappen (1, 2), wobei die Schwenkachsen jeweils nahe einer Wand (6, 7) des Lufteinlasses liegen, die eine rückseitige Verlängerung der betreffenden Hauptklappe (1, 2) bildet, wobei weiterhin in der Wand (6, 7) eine erste Grenzschicht-Auffangkammer (8a, 8b) vorgesehen ist und die Schwenkachsen (4, 5) der beiden Hauptklappen (1, 2) im wesentlichen parallel zur Ebene des Tragwerks (3) bzw. des Rumpfes verlaufen, so daß die Hauptklappen (1, 2) sich senkrecht zu dieser Ebene verstellen lassen,
dadurch gekennzeichnet, daß eine Rampe (11), die um eine im wesentlichen zu den Schwenkachsen (4, 5) der Hauptklappen (1, 2) parallel verlaufenden, nahe der Vorderkante (11a) dieser Rampe befindlichen Schwenkachse (12) bewegt werden kann, in Strömungsrichtung vor der dem Tragwerk bzw. dem Rumpf am nächsten liegenden Hauptklappe (1) angeordnet ist, wobei diese Rampe (11) mit ihrer Vorderkante am Tragwerk (3) bzw. am Rumpf anliegt und zusammen mit der genannten Hauptklappe (1) eine Grenzschicht-Auffangkammer (13) mit veränderbarem Querschnitt bildet.

2. Lufteinlaß nach Anspruch 1, dadurch gekennzeichnet, daß der Querschnitt der Grenzschicht-Auffangkammer (13) mit veränderbaren Querschnitt auf null reduziert werden kann.

3. Lufteinlaß nach Anspruch 2, dadurch gekennzeichnet, daß die Vorderkanten (1a, 2a) der beiden Hauptklappen (1, 2) genau miteinander in Berührung gebracht werden können.

4. Lufteinlaß nach einem der vorangegangenen Ansprüche, dadurch gekennzeichnet, daß die Grenzschicht-Auffangkammer (13) mit veränderbarem Querschnitt einen einstellbaren Durchlaßquerschnitt besitzt, der mit Hilfe von Motoreinrichtungen (25, 14) der stromaufwärts angeordneten Rampe (11) und der Hauptklappen (1, 2) reguliert werden kann.

5. Lufteinlaß nach einem der vorangegangenen Ansprüche, dadurch gekennzeichnet, daß es sich bei den Motoreinrichtungen (25, 14, 15) zur Verstellung der stromaufwärts angeordneten Rampe (11) und der Hauptklappen (1, 2) um lineare Betätigungseinrichtungen handelt, die sich in wenigstens einer Seitenverkleidung (16, 17, 18) des Lufteinlasses rechts von der stromaufwärts gelegenen Rampe (11) bzw. den genannten Hauptklappen (1, 2) befindet, wobei wenigstens ein lineares Betätigungselement (15) auf wenigstens eine (2) der Hauptklappen in Höhe wenigstens einer an der betreffenden Klappe (2) ausgebildeten Seitenflanke (2d) einwirkt.

6. Lufteinlaß nach einem der vorangegangenen Ansprüche, dadurch gekennzeichnet, daß die Wände (6, 7) des Lufteinlasses, die die Verlängerungen der Hauptklappen (1, 2) bilden, feststehende, einander gegenüberliegende Verdichtungsrampen (6c, 7c) aufweisen, welche mit einem nicht veränderbaren Ausströmraum (9) verbunden sind.

7. Lufteinlaß nach Anspruch 6, dadurch gekennzeichnet, daß die Wand (7) des Lufteinlasses, die die Verlängerung der nicht direkt hinter der Rampe (11) angeordneten Hauptklappe (2) bildet, wenigstens eine weitere Grenzschicht-Auffangkammer (10b) aufweist, die mit Hilfe von Motoreinrichtung geschlossen werden kann.

8. Lufteinlaß nach Anspruch 6 und 7, dadurch gekennzeichnet, daß die Wand (6) des Lufteinlasses, die die Verlängerung der direkt hinter der Rampe (11) angeordneten Hauptklappe (1) bildet, wenigstens eine weitere Grenzschicht-Auffangkammer (10a) aufweist, die mit Hilfe von Motoreinrichtungen geschlossen werden kann.
